Europäisches Patentamt

**European Patent Office**

**Office européen des brevets**

(11) Numéro de publication: **0 127 525**
A1

(12) # DEMANDE DE BREVET EUROPEEN

(21) Numéro de dépôt: **84401024.9**

(22) Date de dépôt: **18.05.84**

(51) Int. Cl.³: **H 04 N 7/13**

(30) Priorité: **27.05.83 FR 8308827**

(43) Date de publication de la demande:
**05.12.84 Bulletin 84/49**

(84) Etats contractants désignés:
**BE DE GB IT NL**

(71) Demandeur: **THOMSON-CSF**
**173, Boulevard Haussmann**
**F-75379 Paris Cedex 08(FR)**

(72) Inventeur: **Catros, Jean-Yves**
**THOMSON-CSF SCPI 173, bld Haussmann**
**F-75379 Paris Cedex 08(FR)**

(74) Mandataire: **Lincot, Georges et al,**
**THOMSON-CSF SCPI 173, Bld Haussmann**
**F-75379 Paris Cedex 08(FR)**

(54) **Procédé et dispositif de codage à faible coût en débit de données pour systèmes de télévision à rafraîchissement conditionnel.**

(57) Le dispositif de codage selon l'invention comprend, un circuit d'adressage et codage (8) pour coder les valeurs des signaux de luminance et/ou de chrominance de chaque point d'image suivant un premier code lorsque les points correspondants sont situés dans des zones en mouvement et suivant un deuxième code lorsque les points correspondants sont situés dans des zones élargies. Un circuit d'enchaînement (9) enchaîne des codes obtenus en vue de leur transmission sur le canal de transmission (11) par l'intermédiaire de circuits d'émission (5). Un circuit de pontage (7) commande le codage des valeurs de luminance et/ou de chrominance suivant les premier et deuxième codes. Un détecteur de mouvement (3) est couplé par une première entrée à la sortie d'une mémoire d'image (6) et reçoit sur une deuxième entrée chaque signal courant de luminance et/ou de chrominance à coder. Le détecteur de mouvement (3) compare la valeur de chaque signal courant à la valeur du signal homologue du point courant de l'image précédente mémorisée dans la mémoire d'image (6) et commande, en fonction des résultats de comparaison obtenus, la production par le circuit d'adressage et de codage (8) de la première et de la deuxième suite de code, par l'intermédiaire du circuit de pontage (7).

Application: transmission numérique de signaux de télévision.

Fig.2

1

# Procédé et dispositif de codage à faible coût en débit de données pour systèmes de télévision à rafraichissement conditionnel

L'invention concerne un procédé et un dispositif de codage à faible coût en débit de données pour systèmes de télévision à rafraichissement conditionnel.

Sous sa forme la plus simple, le codage de chaque échantillon d'un signal de télévision de luminance et/ou de différence de couleur est effectué sur une longueur de huit éléments binaires, ce qui impose un débit binaire très élevé.

Pour réduire le débit, tout en maintenant une qualité d'image acceptable, plusieurs procédés et dispositifs sont connus qui exploitent pour la plupart, la redondance des informations contenues dans une image ou dans une séquence d'image.

Un procédé connu consiste, par exemple, après transmission d'une image d'initialisation, à ne transmettre pour les images suivantes que les points dont la luminance change d'une quantité appréciable d'une image à l'autre. Ce procédé qui porte parfois le nom de rafraichissement conditionnel, permet d'obtenir des taux de compression élevés, d'autant plus importants que les seuils de détection par rapport auxquels l'amplitude des signaux de luminance est comparée sont grands.

Toutefois, plus les taux de compression sont importants, plus l'image reconstituée au récepteur présente des imperfections qui donnent l'impression à l'observateur, de regarder l'image au travers d'une vitre sale.

Ces défauts apparaissent principalement dans les zones pseudo-uniformes de l'image où la différence inter-image de chaque point se situe autour du seuil de détection. Comme les zones déclarées en mouvement sont rafraichies et que les zones déclarées fixes ne sont pas rafraichies, il s'ensuit des erreurs de codage assez importantes de l'ordre de grandeur du seuil de détection, pour les points classés dans les zones déclarées fixes. L'oeil étant très sensible aux défauts dans les zones uniformes, ces erreurs apparaissent d'autant plus visibles. Un inconvénient supplémentaire réside dans le fait que la position des points erronés change constamment d'une image à la suivante.

Le but de l'invention est de pallier les inconvénients précités.

A cet effet, l'invention a pour objet un procédé de codage à faible coût en débit de données pour systèmes de télévision à rafraichissement conditionnel, du type comprenant au moins un émetteur et un récepteur de télévision reliés entre eux par un canal de transmission, les données étant représentatives des valeurs de luminance et/ou de chrominance des points de l'image de télévision transmise, le procédé étant caractérisé en ce qu'il consiste, à détecter les points en mouvement de l'image, à construire, à partir des points en mouvement détectés, une image composée par au moins trois types de zones, un premier type de zones ou zones en mouvement contenant les points en mouvement détectés, un deuxième type de zones ou zones élargies contenant les points limitrophes aux zones du premier type détectés à l'intérieur d'une bordure à la lisière de chaque zone en mouvement et un troisième type de zone contenant les points fixes restant de l'image et à coder respectivement, en utilisant des codages différents, les valeurs de luminance et/ou de chrominance des points appartenant aux zones du premier type et des points appartenant aux zones du deuxième type, en accompagnant chaque zone du premier type d'une donnée d'identification permettant de l'identifier dans l'image, pour ne transmettre que les codes et données d'identification des zones du premier type et que les codes des zones du deuxième type.

L'invention a également pour objet un dispositif de codage pour la mise en oeuvre du procédé.

D'autres caractéristiques et avantages de l'invention apparaîtront également à l'aide de la description faite au regard des dessins annexés donnés uniquement à titre d'exemple et dans lesquels :

- La figure 1 est un diagramme représentant un mode d'enchaînement des codes obtenus par le procédé de codage selon l'invention.

- La figure 2 représente un schéma synoptique général du dispositif selon l'invention mis en oeuvre dans un émetteur à rafraichissement conditionnel et appliquant le procédé selon l'invention.

- La figure 3 représente un schéma synoptique général d'un récepteur fonctionnant avec l'émetteur à rafraichissement conditionnel de la figure 1.

- La figure 4 est une représentation détaillée du dispositif d'adressage et de codage des points d'image à transmettre de la figure 1.

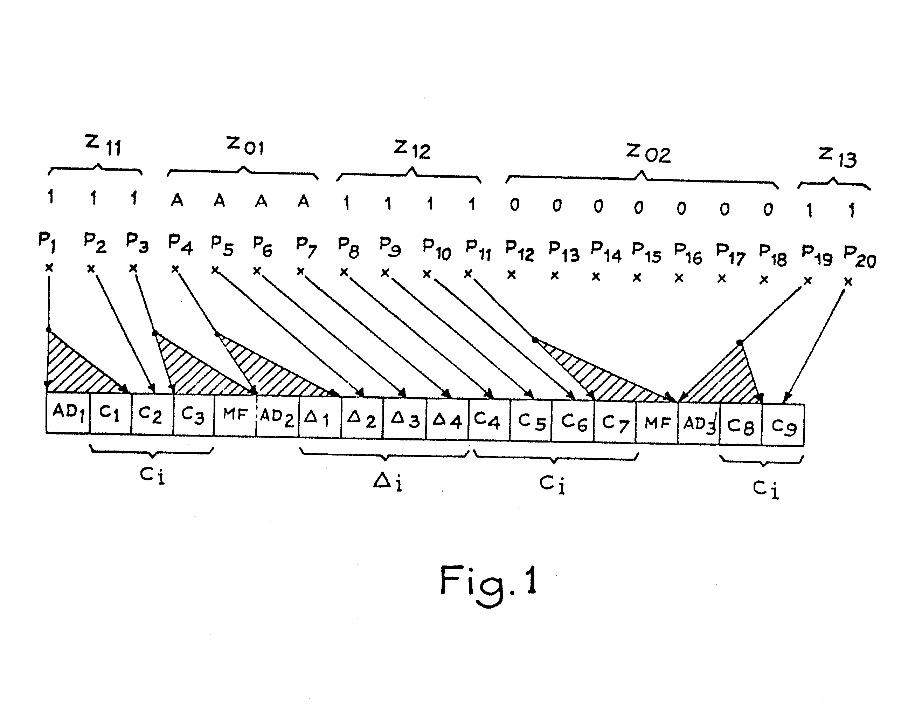

Le procédé de codage selon l'invention qui est illustré à l'aide du diagramme de la figure 1 comprend quatre étapes principales, elles-mêmes décomposables en une ou plusieurs étapes intermédiaires. Il consiste, dans une première étape, à repérer, dans chaque image transmise par une caméra de télévision, les points de l'image qui se déplacent, en attribuant une valeur binaire à chaque point détecté. Par exemple, la valeur binaire 0 est attribuée aux points de l'image reconnus fixes et la valeur binaire 1 est attribuée aux points d'image reconnus en mouvement. Le diagramme de la figure 1 représente une suite de valeurs binaires (1 et 0) attribuées pour une suite de points $P_1$ à $P_{20}$ d'une ligne de balayage d'image, l'ensemble des points codés de cette façon étant représentatif d'une image codée suivant deux niveaux, un premier niveau, ou niveau zéro, sur lequel se trouvent situées toutes les zones fixes de l'image et un deuxième niveau, ou niveau 1, où se trouvent situées toutes les zones en mouvement de l'image.

La deuxième étape du procédé consiste à ne coder que les valeurs des signaux de luminance et/ou de chrominance des points de l'image déclarés en mouvement, suivant des suites de premiers codes ($C_i$ sur la figure 1), en accompagnant ce codage par des données d'identification qui permettront aux récepteurs de reconstruire l'image. Dans un mode préféré de réalisation de l'invention mais non limitatif, ce codage pourra être réalisé en utilisant les méthodes bien connues de codage différentiel pour comprimer au maximum le débit des codes sur le canal de transmission reliant l'émetteur au récepteur, et l'identification sera effectuée par exemple en repérant sur chaque ligne, et pour les zones en mouvement, les adresses de début de zone et de fin de zone en repérant éventuellement ces adresses par rapport à la position de début de ligne.

La troisième étape du procédé consiste à coder également, suivant des suites de deuxièmes codes ($\Delta_i$ sur la figure 1) les points des zones élargies de l'image, situés en bordure sur la lisière de chaque zone en mouvement.

Selon un mode préféré mais non limitatif de réalisation de l'invention des zones élargies pourront être détectées à partir des points d'une ou plusieurs lignes de l'image, situés respectivement sur chaque ligne entre deux points limiteurs de zone marquant l'un, la fin d'une zone en mouvement interceptée par la ligne, l'autre, le début de la zone en mouvement également interceptée par la ligne qui lui succède directement, la distance entre deux points limiteurs d'une ligne étant inférieure à une longueur fixe déterminée. Cette étape importante du procédé qui revient à élargir artificiellement l'espace détecté d'une zone en mouvement, permet de remédier au défaut de vitre sale précédemment décrit qui apparaît principalement dans les zones fixes de l'image proches des zones en mouvement.

Enfin, la quatrième étape du procédé consiste, à enchaîner pour chaque trame d'image les codes obtenus et les données d'identification dans l'ordre représenté à la figure 1 et à transmettre cet enchaînement sur le canal de transmission, pour permettre au récepteur de reconstruire l'image à partir de la trame d'image précédente reconstituée ou qui a été transmise directement lors de l'initialisation de la transmission. Sur la figure 1, les points d'image $(P_1$ à $P_3)$, $(P_8$ à $P_{11})$ et $(P_{19}$ , $P_{20})$ sont des points en mouvement faisant partie de trois zones en mouvement notées respectivement $Z_{11}$, $Z_{12}$ et $Z_{13}$, et la valeur binaire de leurs éléments binaires de repérage est 1. Les points d'image $(P_4$ à $P_7)$ et $(P_{12}$ à $P_{18})$ sont des points fixes répartis respectivement dans deux zones notées $Z_{01}$ et $Z_{02}$. Le signal de luminance et/ou de chrominance de chacun des points des zones en mouvement $Z_{11}$ , $Z_{12}$ , $Z_{13}$ est codé et les codes correspondants notés respectivement $(C_1$ à $C_3)$ ; $(C_4$ à $C_6)$ et $(C_8$ , $C_9)$ sont rangés dans l'ordre des points détectés en mouvement. Chaque zone en mouvement est identifiée par une adresse $AD_i$ de début de zone et un mot de fin de zone MF. Chaque adresse $AD_i$ correspondant à la position sur la ligne de balayage de l'image du point $P_i$ est placée dans l'enchaînement de la figure 1 en tête des codes de la zone $Z_{1i}$ qu'elle désigne. Pour les zones déclarées fixes, la figure 1 fait apparaître une différence de traitement entre les zones $Z_{01}$ et $Z_{02}$ , les points de la zone $Z_{01}$ étant codés par les codes marqués respectivement $\Delta_1$ à $\Delta_n$ alors que les points de la zone $Z_{02}$ ne le sont pas. Cette différence résulte du fait que dans l'exemple, les zones en mouvement $Z_{11}$ et $Z_{12}$ sont considérées comme suffisamment rapprochées l'une de l'autre pour qu'il y ait un risque d'apparition de points erronés dans la zone $Z_{01}$ produisant l'effet de vitre sale précité. Pour supprimer ce risque, les points de la zone $Z_{01}$ sont codés. Par contre, le cas des zones $Z_{12}$ et $Z_{13}$ correspond à celui de zones éloignées pour lesquelles le défaut précité n'apparaît pas et de ce fait, les points de la ligne situés dans la zone $Z_{02}$ ne sont pas codés. Dans le cas du codage de la zone $Z_{01}$ les codes $\Delta_i$ correspondant sont placés en tête des codes $C_i$ de la zone adjacente $Z_{12}$ et la suite des codes $\Delta_i$, $C_i$ est précédée dans l'enchaînement par l'identification de position ou d'adresse $AD_2$ qui désigne le début de la zone $Z_{12}$. Comme le codage des points des zones élargies ne peut avoir lieu que pour les points compris entre les limites consécutives de deux zones en mouvement distantes entre elles d'une longueur inférieure à une longueur fixe déterminée, le nombre des codes possibles $\Delta_i$ d'une zone élargie ne pourra excéder un nombre fixe $N_o$. Cette dernière opération réalise ce qui sera dénommé ci-après "le pontage des zones en mouvement rapprochées" de l'image. Le nombre $N_o$ définira par la suite la taille maximum du pontage qui pourra être effectué entre deux zones en mouvement.

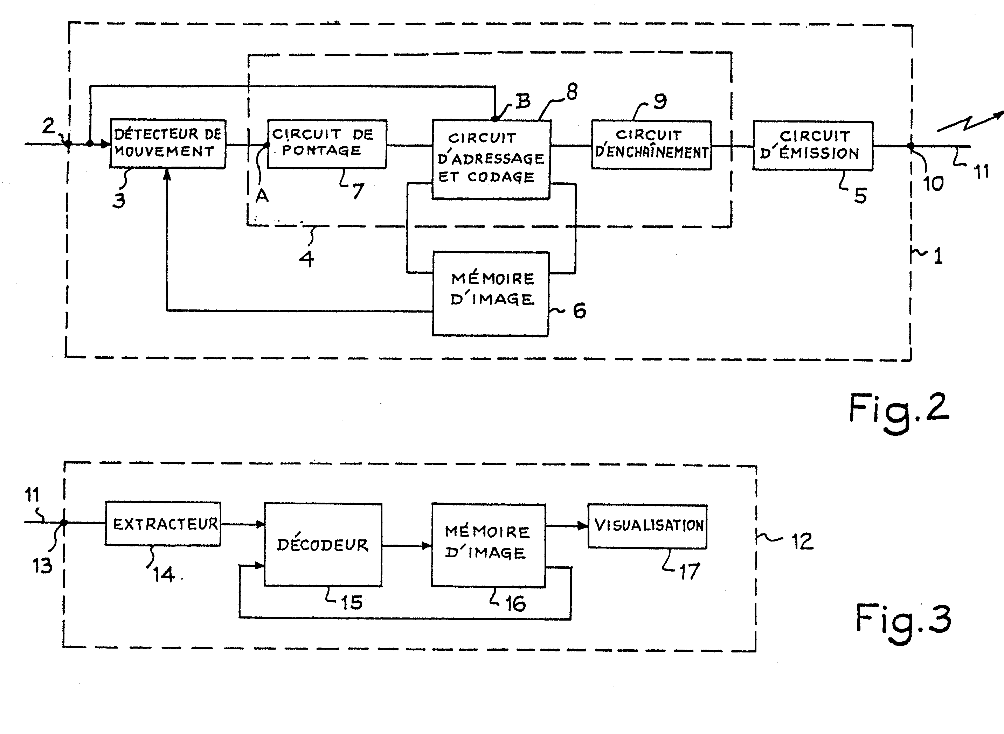

Le dispositif de codage est maintenant décrit en liaison avec les figures 2 à 4.

Le dispositif représenté en 1 à la figure 2, à l'intérieur d'un rectangle en pointillés, reçoit sur son entrée 2 le signal de télévision numérique à transmettre. Il comprend, un détecteur de mouvement 3, un dispositif d'adressage et de codage des points d'images à transmettre 4, représenté également à l'intérieur d'un rectangle en pointillés, reliant la sortie du détecteur de mouvement 3 à l'entrée d'un circuit connu d'émission 5, ainsi qu'une mémoire d'image 6. Le dispositif d'adressage et de codage 4 comprend, un circuit de pontage 7, un circuit d'adressage et de codage 8 et un circuit d'enchaînement de codes 9. Le circuit de pontage 7 est couplé par son entrée A à la sortie du détecteur de mouvement 3 et par sa sortie à une première entrée du circuit d'adressage et de codage 8. Le circuit d'adressage et de codage 8 est couplé par une première sortie à l'entrée du circuit d'enchaînement de codes 9, la sortie de ce dernier constituant la sortie du dispositif d'adressage et de codage 4. La mémoire d'image 6 est couplée à une deuxième sortie du circuit d'adressage et de codage 8 pour mémoriser les échantillons d'image codés et restituer sur une première sortie les échantillons de l'image mémorisés sur une première ligne de données reliant la mémoire d'image 6 à la deuxième entrée du circuit d'adressage et de codage 8 et restituer sur une deuxième sortie les échantillons mémorisés sur une deuxième ligne de données reliant la mémoire d'image 6 à une deuxième entrée du détecteur de mouvements 3. Le signal vidéo numérique reçu sur l'entrée 2 de l'émetteur est également appliqué sur une entrée B du circuit d'adressage et de codage. La sortie du circuit d'émission 5 est couplée par la sortie 10 de l'émetteur à l'entrée d'un canal de liaison 11 reliant l'émetteur 1 au récepteur de télévision dont un exemple de réalisation est montré à la figure 3.

Le récepteur 12 représenté à la figure 3, à l'intérieur d'un rectangle en pointillés, est couplé par son entrée 13 au canal de liaison 11 et comprend de façon connue, un extracteur 14 pour extraire les données vidéo du train numérique transporté par le canal de liaison 11, un décodeur 15 du train numérique reçu couplé par sa sortie à l'entrée d'une mémoire d'image 16 dont une première sortie de données est couplée à un organe de visualisation 17 et dont une deuxième sortie de données est couplée à une deuxième entrée du décodeur 15.

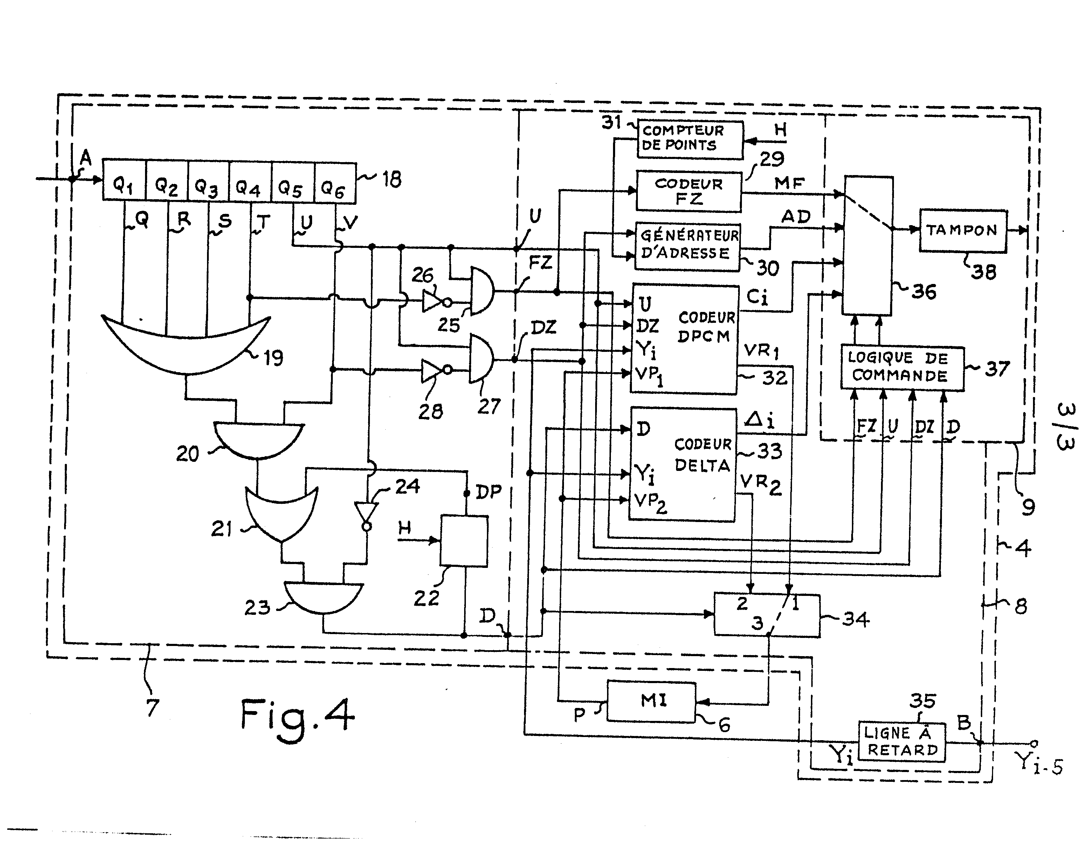

Le fonctionnement de l'émetteur et du récepteur qui viennent d'être décrits à l'aide des représentations des figures 3 et 4 est le suivant. Le signal vidéo numérique qui est appliqué sur l'entrée 2 de l'émetteur est dans l'exemple décrit constitué par des échantillons numériques codés sur des longueurs fixes de bits composés par exemple chacun de huit éléments binaires et appliqués à l'entrée du détecteur de mouvement 3. Chaque échantillon est comparé à un échantillon correspondant de l'image précédente mémorisé dans la mémoire d'image 6 et appliqué sur la deuxième entrée du détecteur de mouvement. La différence $d_i$ entre la valeur numérique de l'échantillon de signal du point courant appliqué à l'entrée du détecteur de mouvement et celle du point homologue de l'image précédente transmis par la mémoire d'image 6 est mesurée par le détecteur de mouvements 3 qui décide, en fonction de la valeur $d_i$ obtenue quels sont les points qui ont changés d'une image à l'autre. Cette décision pourra être prise soit, en vérifiant que la différence de la valeur absolue $d_i$ est plus grande qu'un seuil $S_0$ de référence prédéterminée et dans ce cas, le point $P_i$ correspondant à l'échantillon de signal i appliqué à l'entrée de l'émetteur sera déclaré en mouvement, autrement, le point $P_i$ sera déclaré fixe, soit en analysant la différence inter-image sur plusieurs points n voisins du point $P_i$ analysé situés ou non de part et d'autre de celui-ci et en calculant par exemple, la somme des écarts en valeur absolue des différences entre les valeurs de luminance et/ou de chrominance de chaque point voisin du point analysé et la valeur de luminance et/ou de chrominance du point $P_i$ analysé et en vérifiant que cette somme est supérieure à un certain seuil prédéterminé, ce qui correspond à l'équation

$$\sum_{K=-n}^{K=n} \left| d(i-k) \right| > S_1 \qquad (2).$$

Lorsque l'équation (2) est vérifiée, le point $P_i$ est déclaré en mouvement.

Des détecteurs de mouvement fonctionnant suivant ce principe sont bien connus et l'on pourra par exemple se référer à la description qui en est faite dans la demande de brevet français n° 2 387 557.

La sortie du détecteur de mouvement 3 retransmet les décisions obtenues à l'entrée du dispositif d'adressage et de codage 4 et chaque point d'image se retrouve codé suivant deux niveaux, un premier niveau ou niveau 0 lorsqu'il n'y a pas de mouvement détecté, et un deuxième niveau ou niveau 1 lorsqu'il y a un mouvement détecté. De cette façon, la sortie du détecteur de mouvement retransmet une image comportant deux niveaux. Le rôle du dispositif d'adressage et de codage 4 est de permettre, à partir des éléments binaires fournis par le détecteur de mouvement, d'élaborer les informations nécessaires au récepteur pour reconstruire l'image courante, en assurant une compression notable des données transmises sur le canal de transmission 11. Ce but est atteint par le dispositif d'adressage et de codage 4 qui met en oeuvre des procédés de codage différentiel pour coder les échantillons de signal à transmettre et qui ne transmet que la position des zones en mouvement et la valeur de luminance des points qui ont changés. Le circuit de pontage 7 permet de remédier aux défauts de vitre sale précédemment décrit, en détectant les zones élargies qui séparent deux zones en mouvement consécutives et en réalisant l'opération de pontage des zones en mouvement de l'image. Après mise en forme, les signaux fournis par le dispositif d'adressage et de codage 4 sont transmis sur le canal de transmission 11 via le circuit d'émission 5. A la réception, le récepteur 12 de la figure 3 reconstitue l'image à partir des informations reçues et de l'image précédente stockée à l'intérieur de la mémoire d'image 16.

Pour dissocier les deux suites de codes $\{\Delta_i\}$ et $\{C_i\}$ qui peuvent éventuellement suivre une identification de position ou d'adresse $AD_i$ dans le train numérique des codes transmis, le décodeur 15 du récepteur devra être muni de moyens de traitement, pour comparer chaque adresse $AD_i$ reçue à l'adresse ADF de la fin de la zone signalée par le mot de fin de zone MF précédemment reçu et calculer la différence $N_i = AD_i - ADF-1$. Si la différence $N_i$ est supérieure au nombre fixe prédéterminé $N_o$ définissant la taille du pontage, les codes qui suivent le mot $AD_i$ seront interprétés par le décodeur comme des codes $C_i$, par contre si la différence $N_i$ est inférieure au nombre $N_o$, les codes en nombre $N_i$ qui suivent seront interprétés comme des codes $\Delta_i$. Les moyens de traitement permettant d'effectuer les opérations précitées sont du domaine des réalisations courantes de l'homme de l'art et par conséquent leur mode de réalisation n'a pas besoin d'être plus longuement détaillé.

Un exemple de réalisation du dispositif d'adressage et de codage 4 est maintenant décrit à l'aide de la figure 4. Sur cette figure les circuits de pontage 7, d'adressage et de codage 8, d'enchaînement 9 sont représentés à l'intérieur de rectangles en pointillés. Le circuit de pontage 7 comprend un registre à décalage 18 constitué par six basculeurs montés en série, l'entrée du premier basculeur étant reliée à l'entrée A du circuit de pontage sur laquelle sont appliqués les éléments binaires transmis par le détecteur de mouvement 3. Les quatre premières sorties Q1, Q2, Q3 et Q4, des quatre premiers basculeurs du registre à décalage 18 sont reliées respectivement aux quatre entrées d'un circuit OU 19 dont la sortie est reliée à une première entrée d'une porte ET 20. La deuxième entrée de la porte ET 20 est reliée à la sortie Q6 du sixième basculeur du registre à décalage 18 et est connectée par sa sortie à une première entrée d'une porte OU 21. La deuxième entrée de la porte OU 21 est connectée à la sortie d'un basculeur 22. La sortie de la porte OU 21 est reliée à une première entrée d'une porte ET 23 dont la sortie fournit un signal de zone pontée D indiquant que les points présentement détectés sont à l'intérieur d'une zone élargie. La deuxième entrée de la porte ET 23 est connectée à la sortie Q5 du cinquième basculeur du registre à décalage 18 au travers d'un amplificateur inverseur 24. Le circuit de pontage 7 comprend également une porte ET 25 dont la sortie délivre un signal de fin de zone FZ. La porte ET 25 a une première entrée reliée à la sortie Q5 du cinquième basculeur du registre à décalage 18 et a une deuxième entrée couplée à la sortie Q4 du quatrième basculeur du registre à décalage 18 au travers d'un amplificateur inverseur 26. Le circuit de pontage 7 comprend également une porte ET 27 dont la sortie fournit un signal de début de zone DZ. La porte ET 27 comprend deux entrées, une première entrée est reliée à la sortie Q5 du cinquième basculeur du registre à décalage 18 et la deuxième entrée est reliée à la sortie Q6 du sixième basculeur du registre à décalage 18 au travers d'un amplificateur inverseur 28.

Le circuit de pontage de la figure 4 permet des pontages entre des zones en mouvement distantes au plus sur une même ligne de quatre points d'image. Les pontages entre zones en mouvement consécutives sont réalisés par la détection sur chaque ligne d'image de la limite de fin de zone de chaque zone en mouvement, du début de zone en mouvement qui lui succède, et par la connaissance du nombre de points compris dans l'espace compris sur chaque ligne entre une fin de zone et le début de la zone suivante. Les informations sont fournies à partir de l'état binaire des signaux Q, R, S, T, U, V fournis respectivement par les sorties Q1 à Q6 du registre à décalage 18. L'information de fin de zone est fournie lorsque le signal T à la valeur logique 0 et lorsque le signal U à la valeur logique 1. Le signal de début de zone DZ est fourni par la sortie de la porte ET 27 lorsque simultanément le signal U à la valeur logique 1 et le signal V à la valeur logique 0. Le signal d'indication de zone pontée D est fournie par la porte ET 23, il prend le niveau 1 logique lorsque simultanément les signaux V et U ont respectivement les valeurs 1 et 0, et lorsque l'un quelconque des signaux Q, R, S, T à la valeur logique 1. Le signal D peut prendre aussi la valeur 1 logique, lorsque, à un instant donné, le signal U à la valeur 0 logique et lorsque, à l'instant précédent, le signal D présentait la valeur 1 logique. Cette dernière opération étant réalisée grâce au fait que, la valeur du signal D est mémorisée à tout instant dans le basculeur 22. Les signaux U, F Z, D Z et D sont transmis au circuit d'adressage et de codage 8 dont le rôle est de coder différemment les points situés dans des zones en mouvement et les points situés à l'intérieur d'une zone pontée ou zone élargie détectée par le circuit de pontage 7 qui vient d'être décrit.

Le circuit d'adressage et de codage 8 représenté à la figure 4 comprend un codeur de fin de zone 29, un générateur d'adresses 30 pour fournir l'adresse des débuts de zones déclarées en mouvement, un compteur de points 31, un codeur différentiel type DPCM 32, un codeur type DELTA 33, un multiplexeur 34 et une ligne à retard 35 sur l'entrée de laquelle sont appliqués les échantillons $Y_{i-5}$ de luminance et/ou de chrominance du signal de télévision.

Le codeur de fin de zone 29 est relié par son entrée à la sortie de la porte ET 25, et fournit sur sa sortie un code MF de valeur fixe chaque fois qu'un signal de fin de zone FZ est fourni par la porte ET 25.

Le générateur d'adresses 30 est relié par une première entrée à la sortie d'un compteur de point 31 qui compte au rythme d'un signal d'horloge H, fourni par un circuit d'horloge non représenté, les points successivement échantillonnés sur une même ligne d'image. Le contenu du compteur 31 est chargé dans le générateur d'adresse 30 sous la commande du signal DZ de début de zone DZ appliqué sur la deuxième entrée du générateur d'adresse 30.

Le codeur DPCM 32 est un codeur différentiel de type connu, du type par exemple de ceux décrits dans les demandes de brevet français n° 81 20 167 et n° 82 14 434 déposées au nom de la Demanderesse. Le codeur 32 comprend quatre entrées, une première entrée est reliée à la sortie $Q_5$ du registre 18 fournissant le signal U, une deuxième entrée est reliée à la sortie de la porte 27 fournissant le signal DZ, une troisième entrée est reliée à la sortie de la ligne à retard 35 fournissant les échantillons de luminance et/ou de chrominance $Y_i$ du signal de télévision et une quatrième entrée est reliée à la sortie de la mémoire d'image 6 fournissant une valeur de prédiction $VP_1$. L'échantillon $Y_i$ à coder est diminué de la valeur de prédiction $VP_1$ par un circuit interne au codeur 32 non représenté, et la différence obtenue ou erreur de prédiction est codée à l'intérieur du codeur par un circuit interne au codeur non représenté, constitué de façon connue par un quantificateur et un allocateur de code. Le code $C_i$, obtenu correspondant à l'échantillon $Y_i$, est appliqué par l'allocateur de code sur une première sortie du codeur 32. Une deuxième sortie du codeur 32 applique une valeur reconstruite $VR_1$ de l'échantillon sur l'entrée de la mémoire d'image 6, au travers d'un aiguilleur 34, pour associer à la valeur reconstruite $VR_1$ de l'échantillon, une valeur de prédiction $VP_1$ mémorisée dans la mémoire 6 et qui sera utilisée pour le codage de l'échantillon suivant.

Le codeur "delta" 33 comprend trois entrées, une première entrée est reliée à la sortie de la porte ET 23 transmettant le signal D, une deuxième entrée est reliée à la sortie de la ligne à retard 35 transmettant l'échantillon de signal $Y_i$ et la troisième entrée est reliée à la sortie de prédiction VP de la mémoire d'image 6. Le codeur 33 est, comme le codeur 32, un codeur de type différentiel, à la différence près que, l'allocateur de code, interne au codeur, code l'erreur de prédiction avec un seul élément binaire. La valeur de code $\Delta_i$ correspondante est fournie par l'allocateur de code du codeur 33 sur une première sortie du codeur 33, et la valeur reconstruite $VR_2$ est appliquée sur l'entrée de la mémoire d'image 6 au travers de l'aiguilleur 34 pour associer à la valeur reconstruite $VR_2$ une valeur de prédiction $VP_2$ qui sera utilisée pour le codage de l'échantillon suivant.

Le circuit d'enchaînement de codes 9 qui a pour fonction d'assurer des enchaînements du type de celui représenté à la figure 1, comprend un démultiplexeur 36 à quatre entrées commandé par une logique de commande 37. Le circuit d'enchaînement 9 comprend également une mémoire tampon 38, reliée par son entrée à la sortie du démultiplexeur 36. Les entrées du démultiplexeur 36 sont reliées respectivement aux sorties du codeur 29, du générateur d'adresse 30, du codeur 32 et du codeur 33. La logique de commande 37 a également quatre entrées qui sont reliées respectivement à la sortie de la porte ET 25, à la sortie $Q_5$ du registre 18, à la sortie de la porte ET 27 et à la sortie de la porte ET 23. Lorsque, le signal U est appliqué sur l'entrée correspondante de la logique de commande 37, le mot d'adresse AD fourni par le générateur d'adresse 30 est transféré par le démultiplexeur 36 à l'intérieur de la mémoire tampon 38. Le mot de fin de zone MF, fourni par le codeur 29, est transféré dans la mémoire tampon 38 lorsque, le signal de fin de zone FZ est appliqué sur l'entrée correspondante de la logique de commande. Les mots de code $C_i$ et $\Delta_i$ sont transférés à l'intérieur de la mémoire tampon 38 lorsque respectivement les signaux DZ et D sont appliqués sur les entrées correspondantes de la logique de commande 37 pour être dirigés par la suite dans l'ordre de l'enchaînement réalisé sur le canal de transmission 11 au travers des circuits d'émissions 5 de la figure 2.

Bien que le principe de la présente invention ait été décrit ci-dessus en relation avec un exemple particulier de réalisation, il faut comprendre que la description de l'invention n'a été faite qu'à titre d'exemple et ne limite pas la portée de l'invention.

D'autres variantes de réalisations sont en effet possibles, notamment, en modifiant l'ordre de l'enchaînement des codes et des données d'identification des zones ou en utilisant d'autres procédés de codage que ceux qui viennent d'être exposés.

REVENDICATIONS

1. Procédé de codage à faible coût en débit de données pour systèmes de télévision à rafraichissement conditionnel du type comprenant au moins un émetteur et un récepteur de télévision reliés entre eux par un canal de transmission, les données étant représentatives des valeurs de luminance et/ou de chrominance des points de l'image de télévision transmise, le procédé étant caractérisé en ce qu'il consiste, à détecter les points en mouvement de l'image, à construire, à partir des points en mouvement détectés, une image composée par au moins trois types de zones, un premier type de zones ou zones en mouvement contenant les points en mouvement détectés, un deuxième type de zones ou zones élargies contenant les points limitrophes aux zones du premier type détectés à l'intérieur d'une bordure à la lisière de chaque zone en mouvement et un troisième type de zone contenant les points fixes restant de l'image et à coder respectivement, en utilisant des codages différents, les valeurs de luminance et/ou de chrominance des points appartenant aux zones du premier type et des points appartenant aux zones du deuxième type en accompagnant chaque zone du premier type d'une donnée d'identification permettant de l'identifier dans l'image, pour ne transmettre que les codes et données d'identification des zones du premier type et que les codes des zones du deuxième type.

2. Procédé de codage selon la revendication 1, caractérisé en ce que les zones élargies sont formées par les points de l'image compris entre les zones en mouvement du premier type rapprochées de l'image, chaque zone élargie étant constituée par les points d'une ou plusieurs lignes de l'image situés respectivement sur chaque ligne entre deux points limiteurs de zone marquant, l'un, la fin d'une zone en mouvement, l'autre, le début de la zone en mouvement qui lui succède directement, la distance entre deux points limiteurs de zone d'une ligne étant inférieure à une longueur fixe déterminée.

3. Procédé selon l'une quelconque des revendications 1 et 2, caractérisé en ce qu'il consiste, à identifier à l'aide de données d'identification la position des zones en mouvement et à enchaîner dans un ordre déterminé les codes et les données d'identification des points des zones en mouvement et des zones élargies de l'image pour transmettre sur le canal de transmission les codes et les données d'identification de l'enchaînement ainsi obtenu.

4. Procédé selon l'une quelconque des revendications 1, 2 et 3, caractérisé en ce qu'il consiste, pour détecter les points en mouvement de l'image, à mesurer la différence entre la valeur numérique de l'échantillon de signal correspondant au point courant détecté et la valeur de l'échantillon de signal du point homologue de l'image précédente, à comparer la différence obtenue à un seuil de référence prédéterminé et à sélectionner les points pour lesquels la différence obtenue est supérieure au seuil de référence prédéterminé.

5. Procédé selon l'une quelconque des revendications 1 à 4, caractérisé en ce qu'il consiste, pour détecter un point en mouvement de l'image à analyser la différence inter-image de plusieurs point n voisins du point d'image analysé et à calculer la somme des écarts en valeur absolue des différences entre les valeurs de luminance et/ou de chrominance de chaque point voisin du point analysé et la valeur de luminance et/ou de chrominance du point d'image analysé et à sélectionner le point lorsque cette somme est supérieure à un certain seuil prédéterminé.

6. Procédé selon l'une quelconque des revendications 1 et 5, caractérisé en ce que le codage des valeurs de luminance et/ou de chrominance des points des zones en mouvement s'effectue à l'aide du procédé de codage différentiel du type DPCM.

7. Procédé selon l'une quelconque des revendications 1 à 6, caractérisé en ce que le codage des points des zones élargies s'effectue à l'aide d'un procédé de codage de type "delta", DPCM sur un élément binaire avec une prédiction inter-image.

8. Procédé selon l'une quelconque des revendications 1 à 7, caractérisé en ce qu'il consiste pour enchaîner les codes et les données d'identification avant leur transmission sur le canal de transmission, à ranger les suites des codes calculés relatives aux zones en mouvement dans l'ordre de détection des points de l'image en faisant précéder chaque suite de codes relative à une zone en mouvement de sa donnée d'identification et en plaçant à la fin de chaque suite de codes un mot indiquant la fin de la suite et en ce qu'il consiste également à intercaler dans chaque suite de code relative à une zone en mouvement les codes obtenus par codage des points de la zone élargie adjacente correspondante entre la donnée d'identification précédant chaque suite et les codes de la suite qui lui succèdent.

9. Dispositif de codage pour la mise en oeuvre du procédé selon l'une quelconque des revendications 1 à 8, caractérisé en ce qu'il comprend un circuit d'adressage et codage (8) pour coder les valeurs des signaux de luminance et/ou de chrominance de chaque point d'image suivant un premier code lorsque les points correspondants sont situés dans des zones en mouvement et suivant un deuxième code lorsque les points correspondants sont situés dans des zones élargies, un circuit d'enchaînement (9) des codes obtenus en vue de leur transmission sur le canal de transmission (11) par l'intermédiaire de circuits d'émission (5), un circuit de pontage (7) pour commander le codage des valeurs de luminance et/ou de chrominance suivant les premier et deuxième codes, ainsi qu'un détecteur de mouvement (3) couplé par une première entrée à la sortie d'une mémoire d'image (6) et recevant sur une deuxième entrée chaque signal courant de luminance et/ou de chrominance à coder, pour comparer la valeur de chaque signal courant à la valeur du signal homologue du point courant de l'image précédente mémorisée dans la mémoire d'image (6) et commander, en fonction des résultats de comparaison obtenus, la production par le circuit d'adressage et de codage (8) de la première et de la deuxième suite de code, par l'intermédiaire du circuit de pontage (7).

10. Dispositif selon la revendication 9, caractérisé en ce que le circuit de pontage (7) comprend des moyens de détection pour détecter sur chaque ligne d'image la limite de fin de zone de chaque zone en mouvement et la limite de début de la zone en mouvement qui lui succède, des moyens de mesure (18, 19, 22, 23) sur chaque ligne de la longueur de l'espace compris entre chaque zone en mouvement ainsi que des moyens de commande (23) du codage des zones élargies lorsque la longueur de l'espace mesurée est inférieure à une longueur prédéterminée.

11. Dispositif selon l'une quelconque des revendications 9 et 10, caractérisé en ce que le circuit d'adressage et de codage (8) comprend un premier codeur différentiel (32) commandé par le circuit de pontage (7) pour coder les points détectés en mouvement suivant un premier code et un deuxième codeur diférentiel (33), sensible aux moyens de commande (23) du codage des zones élargies, pour coder les points détectés des zones élargies suivant un deuxième code.

12. Dispositif selon l'une quelconque des revendications 9 à 11, caractérisé en ce que le circuit d'enchaînement (9) comprend une mémoire tampon (38) reliée aux sorties des premier et deuxième codeurs différentiels, au travers, d'un démultiplexeur (36) commandé par les sorties des moyens de détection (18, 25, 27) fournissant à chaque ligne d'image les limites de début et de fin de zone en mouvement et par la sortie des moyens de commande (23) des zones élargies lorsque la longueur de l'espace mesurée sur une ligne entre deux zones consécutives en mouvement est inférieure à une longueur prédéterminée.

$z_{11}$  $z_{01}$  $z_{12}$  $z_{02}$  $z_{13}$

1  1  1  A  A  A  A  1  1  1  1  0  0  0  0  0  0  0  1  1

$P_1$  $P_2$  $P_3$  $P_4$  $P_5$  $P_6$  $P_7$  $P_8$  $P_9$  $P_{10}$  $P_{11}$  $P_{12}$  $P_{13}$  $P_{14}$  $P_{15}$  $P_{16}$  $P_{17}$  $P_{18}$  $P_{19}$  $P_{20}$

| $AD_1$ | $C_1$ | $C_2$ | $C_3$ | MF | $AD_2$ | $\Delta_1$ | $\Delta_2$ | $\Delta_3$ | $\Delta_4$ | $C_4$ | $C_5$ | $C_6$ | $C_7$ | MF | $AD_3$ | $C_8$ | $C_9$ |

$C_i$  $\Delta_i$  $C_i$  $C_i$

Fig.1

0127525

Fig.2

Fig.3

0127525

Fig.4

3/3

0127525

48

0127525

**Office européen des brevets**

**RAPPORT DE RECHERCHE EUROPEENNE**

Numéro de la demande

EP  84 40 1024

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 761 613 (LIMB) <br> * Colonne 3, ligne 44 - colonne 5, ligne 42; colonne 10, ligne 3 - colonne 11, ligne 12; colonne 12, ligne 63 - colonne 13, ligne 19 * | 1-4 | H 04 N    7/13 |
| Y | | 5-7,9, 10,12 | |
| | --- | | |
| Y | US-A-3 825 832 (FREI) <br> * Colonne 4, ligne 26 - colonne 6, ligne 26 * | 6,7 | |
| | --- | | |
| Y | NACHRICHTENTECHNISCHE ZEITSCHRIFT, vol. 30, no. 3, mars 1977, pages 245-250, Berlin, DE; H. WENDT: "Schmalband-Codierung" <br> * Page 245, colonne de gauche, ligne 36 - page 248, colonne de droite, ligne 9 * | 5,9,10 | **DOMAINES TECHNIQUES RECHERCHES (Int. Cl. 3)** <br><br> H 04 N |
| | --- | | |
| Y | FREQUENZ, vol. 33, no. 1, janvier 1979, pages 3-8, Berlin, DE; G. BOSTELMANN: "Ein Codec für Bildfernsprechsignale mit subjecktiv optimiertem Bewegungsdetektor" <br> * Page 3, colonne de gauche, ligne 5 - page 5, colonne de droite, ligne 2 * | 5,9,10 | |
| | ---           -/- | | |

Le présent rapport de recherche a été établi pour toutes les revendications

| Lieu de la recherche | Date d'achèvement de la recherche | Examinateur |
|---|---|---|
| LA HAYE | 10-09-1984 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| | **DOCUMENTS CONSIDERES COMME PERTINENTS** | | Page 2 |
|---|---|---|---|
| **Catégorie** | Citation du document avec indication, en cas de besoin, des parties pertinentes | **Revendication concernée** | **CLASSEMENT DE LA DEMANDE (Int. Cl. ³)** |
| Y | US-A-3 553 362 (MOUNTS)<br>* Colonne 2, ligne 36 - colonne 5, ligne 23 *<br><br>--- | 1,12 | |
| A | US-A-4 006 297 (KOGA)<br><br>--- | | |
| A | ELECTRONICS LETTERS, vol. 15, no. 5, 1 mars 1979, pages 142-144, Hitchin, GB; T.J. TENNIS: "Quantiser selection for interframe differential pulse code modulation of television pictures"<br><br>----- | | |

**DOMAINES TECHNIQUES RECHERCHES (Int. Cl. ³)**

Le présent rapport de recherche a été établi pour toutes les revendications

| Lieu de la recherche | Date d'achèvement de la recherche | Examinateur |
|---|---|---|
| LA HAYE | 10-09-1984 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82